# EUROPÄISCHE PATENTSCHRIFT

(11) **EP 3 948 913 B1**
(45) Veröffentlichungstag und Bekanntmachung des Hinweises auf die Patenterteilung: **12.10.2022**
(21) Anmeldenummer: 20712959.4
(22) Anmeldetag: 19.03.2020
(51) Int. Cl.: H01H 39/00, B60L 3/04, B60R 16/023

(54) **ELEKTRISCHE SICHERUNG, VERFAHREN ZUM BETREIBEN EINER ELEKTRISCHEN SICHERUNG UND ELEKTRISCHES TRAKTIONSNETZ**
ELECTRICAL FUSE, METHOD FOR OPERATING AN ELECTRICAL FUSE, AND ELECTRICAL TRACTION NETWORK
FUSIBLE ÉLECTRIQUE, PROCÉDÉ POUR FAIRE FONCTIONNER UN FUSIBLE ÉLECTRIQUE ET RÉSEAU DE TRACTION ÉLECTRIQUE

(30) Priorität: 25.03.2019 DE 102019204033
(43) Veröffentlichungstag der Anmeldung: 09.02.2022
(73) Patentinhaber: VOLKSWAGEN AKTIENGESELLSCHAFT, 38440 Wolfsburg (DE)
(72) Erfinder: KUBE, Roland, 38179 Schwülper (DE)
(86) Internationale Anmeldenummer: PCT/EP2020/057676
(87) Internationale Veröffentlichungsnummer: WO 2020/193375

(56) Entgegenhaltungen:
- DE-A1- 10 334 197
- DE-A1-102017 203 851
- US-A1- 2018 248 354

## Beschreibung

Die Erfindung betrifft eine elektrische Sicherung und ein Verfahren zum Betreiben einer elektrischen Sicherung. Ferner betrifft die Erfindung ein elektrisches Traktionsnetz.

Hochvoltbatterien für Kraftfahrzeuge enthalten neben Batteriezellen eine Anschlusseinheit (engl. "Battery Junction Box"), die es ermöglicht, eine batterie-interne Hochspannung aktiv auf das Fahrzeug-Traktionsnetz zu schalten oder von diesem zu trennen. Hierdurch kann erreicht werden, dass auf dem Fahrzeug-Traktionsnetz nur während der Fahrt Hochspannung liegt, bei abgestelltem Kraftfahrzeug hingegen Spannungsfreiheit herrscht. Üblicherweise weist die Anschlusseinheit zwei elektromechanische Schütze auf, über die ein Pluspfad und ein Minuspfad zu- bzw. weggeschaltet werden können.

Während des Batteriebetriebs (z.B. bei der Fahrt oder beim Laden der Batterien) wird eine Überlastung der Batteriezellen und der elektromechanischen Schütze verhindert, indem ein maximal zulässiger Strom begrenzt wird, wobei aktuelle Randbedingungen berücksichtigt werden, wie beispielsweise eine Temperatur der Batteriezellen. Wird der maximale Strom überschritten, so erfolgt nach einer vordefinierten Plausibilisierungszeit ein Öffnen der Schütze. Hierdurch wird eine Beschädigung der Batteriezellen verhindert.

Ferner ist grundsätzlich zu beachten, dass eine Stromtragfähigkeit der Schütze nicht überschritten wird. Oberhalb der Stromtragfähigkeit bewirkt ein durch den Stromfluss verursachter Wärmeeintrag ein Verschweißen von Schützkontakten der Schütze. Um dies zu vermeiden, müssen die Schütze vor Erreichen der Stromtragfähigkeit geöffnet werden.

Im Fall eines Kurzschlusses überschreitet der Strom jedoch so schnell die Stromtragfähigkeit der Schütze, dass mit einem Verschweißen der Schützkontakte gerechnet werden muss. Daher wird üblicherweise eine zusätzliche Schmelzsicherung vorgesehen, die in diesem Fall die Trennung des Stromkreises übernimmt und damit sowohl die Batteriezellen als auch das Hochvoltbordnetz vor einer Überlastung schützt.

Bei der Sicherungsauslegung muss die Alterung der Sicherungen durch die während des Fahrzeugbetriebs auftretenden, ausgeprägten Strom-Peaks berücksichtigt werden. Da die Auslöseschwelle der Sicherungen mit zunehmender Alterung abnimmt, ist es erforderlich, Sicherungen einzusetzen, die genügend groß sind, um auch in gealtertem Zustand bei Strom-Peaks innerhalb des normalen Betriebsstrom-Bereichs nicht auszulösen. Im Neuzustand haben diese großen Sicherungen jedoch eine höhere Auslöseschwelle, so dass die Kabelquerschnitte des angeschlossenen Hochvoltbordnetzes entsprechend groß gewählt werden müssen.

Zum Schutz von 12-V-Bordnetzbatterien in Kraftfahrzeugen ist ferner ein Pyroelement (sogenannte "Pyro-Fuse") bekannt. Ein solches Pyroelement wird beispielsweise von der Firma Autoliv als "Pyro Safety Switch (PSS)" vertrieben. Der "Pyro Safety Switch" befindet sich in direkter Nähe zu der 12-V-Bordnetzbatterie und trennt im Falle eines Unfalls die Verbindungsleitung zwischen der 12-V-Bordnetzbatterie und einem 12-V-Generator und/oder einem 12-V-Bordnetz. Als Signal zum Auslösen dieser Trennung wird beispielsweise ein Signal eines Airbag-Steuergeräts (engl. Airbag Control Unit - ACU) benutzt. Sobald dieses Signal den Zustand "aktiv" einnimmt, erzeugt die ACU an einem Steuereingang des "Pyro Safety Switches" eine Spannung von >10 V. Entsprechend dem Innenwiderstand des "Pyro Safety Switches" resultiert hieraus ein Strom von >1,75 A, wodurch spätestens nach 0,5 ms eine Sprengladung in einem Zünder des "Pyro Safety Switches" explodiert und ein kolbenförmiges Trennelement in Bewegung setzt. Spätestens nach weiteren 0,1 ms berührt das kolbenförmige Trennelement mit einer speziell hierfür ausgebildeten Nase einen Trennabschnitt einer Stromschiene und durchtrennt diese. Die Stromschiene ist anschließend durchtrennt und ein Strom kann nicht mehr über diese fließen.

Aus der DE 10 2012 214 835 A1 sind ein pyrotechnischer Schalter für ein Kraftfahrzeug-Batteriesystem und eine Batterie bekannt, wobei der Schalter einen Shunt, welcher seriell in einen Schaltstrompfad eingebunden ist, ein Schaltelement, welches seriell in den Schaltstrompfad eingebunden ist, und einen elektrisch aktivierbaren pyrotechnischen Zünder umfasst, wobei ein Steuerausgang einer elektronischen Schaltung mit dem Zünder und ein Steuereingang der Schaltung mit dem Shunt verbunden ist. Ferner ist ein Verfahren zur Ansteuerung eines pyrotechnischen Schalters beschrieben, mit den Schritten: Ansteuern mindestens eines Steuereingangs der elektronischen Schaltung mit einer elektrischen Ist-Größe, Vergleichen der Ist-Größe mit einem vorgebbaren Grenzwert, Aktivieren des Zünders, sofern die Ist-Größe den Grenzwert überschreitet, und Aktivieren des Schaltelements durch den aktivierten Zünder, so dass der Versorgungsstrom getrennt wird, wobei die elektronische Schaltung mit einem Ladungsspeicher gepuffert wird.

Aus der EP 3 327 745 A1 sind eine elektrische Sicherung, ein Verfahren zum Betreiben einer elektrischen Sicherung und ein elektrisches Traktionsnetz bekannt. Die elektrische Sicherung umfasst einen elektro-pyrotechnischen Zünder, ein mittels des elektro-pyrotechnischen Zünders bewegbares Trennelement, und eine Stromschiene mit einem Trennabschnitt, wobei das bewegbare Trennelement in Bezug auf den elektro-pyrotechnischen Zünder und den Trennabschnitt der Stromschiene derart angeordnet ist, dass das bewegbare Trennelement sich nach einem Auslösen des elektro-pyrotechnischen Zünders in Bewegung setzen und hierdurch die Stromschiene im Trennabschnitt durchtrennen kann, wobei die elektrische Sicherung mindestens ein Auslösemittel aufweist, welches derart ausgebildet ist, einen zum Auslösen des elektro-pyrotechnischen Zünders notwendigen Zündstrom auf Grundlage eines über mindestens einen Abschnitt der Stromschiene geführten Stroms oder dessen zeitlicher Änderung bereitzustellen, wenn der auf dem mindestens einen Abschnitt der Stromschiene geführte Strom oder dessen zeitlicher Änderung einen Grenzwert überschreitet. Das Auslösemittel kann eine an der Stromschiene angeordnete Induktionsschleife umfassen.

Aus der CN 203 300 911 U ist eine Steuerschaltung zur Anzeige eines abnormalen Zustands des Stromkreises beschrieben. In der US 2018/0 331 571 A1 ist eine induktive Strommessung beschrieben, um eine Sicherung auszulösen. Aus der DE 195 03 809 A1 ist eine SMA-Sicherung (SMA steht für Shape-memory-alloy) für Fahrzeuge bekannt. Dabei kann die SMA-Sicherung anstelle einer Sprengkapsel vorteilhaft sein.

Aus der US 3 958 206 A ist eine elektropyrotechnische Sicherung bekannt, die einen Stromsensor und eine Batterie zur Bereitstellung der Zündstroms zur Verfügung zu stellen. Durch die Batterie wird eine schnellere Auslösung der pyrotechnischen Sicherung erreicht.

Aus der DE 10 2017 203 851 A1 ist eine elektrische Sicherung für ein elektrisches Transaktionsnetz bekannt. Dabei umfasst die Sicherung einen elektro-pyrotechnischen Zünder, ein mittels des elektro-pyrotechnischen Zünders bewegbares Trennelement, und eine Stromschiene mit einem Trennabschnitt. Dabei ist das bewegbare Trennelement in Bezug auf den elektro-pyrotechnischen Zünder und den Trennabschnitt der Stromschiene derart angeordnet, dass das bewegbare Trennelement sich nach einem Auslösen des elektro-pyrotechnischen Zünders in Bewegung setzen und hierdurch die Stromschiene im Trennabschnitt durchtrennen kann. Zum Auslösen des elektro-pyrotechnischen Zünders wird ein über mindestens einen Abschnitt der Stromschiene geführter Strom oder dessen zeitliche

Änderung erfasst und bei Überschreitung eines Grenzwerts die Auslösung über den Zündstrom veranlasst.

Die DE 103 34 197 A1 betrifft eine Anordnung zum Schutz einer elektrischen Einrichtung. Dabei ist die Einrichtung über eine Polklemme an einen Pol einer Batterie angeschlossen. Eine Schutzkontakteinheit besitzt einen Anschlussabschnitt, der direkt mit der Polklemme verbunden ist, sowie einen Starthilfe-Kontaktabschnitt, der über einen Schalter mit dem Anschlussabschnitt verbunden ist. Eine Auswerteschaltung betätigt den Schalter zum Trennen der elektrischen Verbindung zwischen Starthilfe-Kontaktabschnitt und Anschlussabschnitt, sobald die Auswerteschaltung einen Fehlstrom feststellt. Auch in der US 2018/248354 A1 ist ein pyrotechnischer Sprengschalter beschrieben, in dem Halbleiterschalter durch eine Steuereinheit gesteuert wird.

Der Erfindung liegt die Aufgabe zu Grunde, eine elektrische Sicherung und ein Verfahren zum Betreiben einer elektrischen Sicherung zu schaffen, bei denen der elektro-pyrotechnische Zünder zuverlässiger ausgelöst werden kann. Eine weitere Aufgabe ist die Schaffung eines verbesserten elektrischen Traktionsnetzes.

Die Aufgabe wird erfindungsgemäß durch eine elektrische Sicherung mit den Merkmalen des Patentanspruchs 1, ein Verfahren mit den Merkmalen des Patentanspruchs 8 sowie ein elektrisches Traktionsnetz mit den Merkmalen des Patentanspruchs 10 gelöst. Vorteilhafte Ausgestaltungen der Erfindung ergeben sich aus den Unteransprüchen.

Insbesondere wird eine elektrische Sicherung geschaffen, umfassend einen elektro-pyrotechnischen Zünder, ein mittels des elektro-pyrotechnischen Zünders bewegbares Trennelement, und eine Stromschiene mit einem Trennabschnitt, wobei das bewegbare Trennelement in Bezug auf den elektro-pyrotechnischen Zünder und den Trennabschnitt der Stromschiene derart angeordnet ist, dass das bewegbare Trennelement sich nach einem Auslösen des elektro-pyrotechnischen Zünders in Bewegung setzen und hierdurch die Stromschiene im Trennabschnitt durchtrennen kann, und mindestens ein an der Stromschiene oder einer Hochvoltleitung angeordnetes induktives Kopplungsmittel. Die elektrische Sicherung umfasst ferner eine Steuerschaltung zum Steuern eines zum Auslösen des elektro-pyrotechnischen Zünders bereitgestellten Zündstroms, wobei die Steuerschaltung mindestens einen Halbleiterschalter zum Schalten des bereitgestellten Zündstroms, mindestens einen mit einem Ansteuereingang des Halbleiterschalters verbundenen Kondensator und eine Diode umfasst, wobei die Diode auf einer Seite mit dem mindestens einen induktiven Kopplungsmittel und auf der anderen Seite mit dem Kondensator und einem Ansteuereingang des Halbleiterschalters verbunden ist.

Ferner wird insbesondere ein Verfahren zum Betreiben einer elektrischen Sicherung zur Verfügung gestellt, umfassend die folgenden Schritte: Bereitstellen eines Zündstroms für einen elektro-pyrotechnischen Zünder, Auslösen des elektro-pyrotechnischen Zünders, Bewegen eines bewegbaren Trennelements mittels des ausgelösten elektro-pyrotechnischen Zünders, Durchtrennen eines Trennabschnitts einer Stromschiene mittels des bewegbaren Trennelements, wobei der zum Auslösen des elektro-pyrotechnischen Zünders bereitgestellte Zündstrom mittels eines Halbleiterschalters einer Steuerschaltung gesteuert wird, wobei der Halbleiterschalter mittels eines Kondensators der Steuerschaltung an einem Ansteuereingang des Halbleiterschalters angesteuert wird, und wobei der Kondensator mittels mindestens eines an der Stromschiene oder einer Hochvoltleitung angeordneten induktiven Kopplungsmittels über eine Diode geladen wird.

Weiter wird ein elektrisches Traktionsnetz für ein Kraftfahrzeug geschaffen, umfassend eine Hochvoltspannungsquelle und mindestens eine Hochvoltkomponente, wobei die mindestens eine Hochvoltkomponente über mindestens eine Leitung mit der Hochvoltspannungsquelle verbunden ist, wobei in der mindestens einen Leitung eine elektrische Sicherung nach einer der beschriebenen Ausführungsformen angeordnet ist.

Durch die elektrische Sicherung und das Verfahren ist es möglich, eine elektrische Verbindung auch bei geringeren über die Stromschiene fließenden maximalen Strömen, wie diese beispielsweise in einem Kurzschlussfall bei niedrigen Temperaturen durch eine Hochvoltbatterie hervorgerufen werden, zuverlässig mittels des Trennelements zu trennen. Die Steuerschaltung ist ferner sehr einfach aufgebaut und arbeitet weitgehend passiv, das heißt aufwändige Steuerkreise oder eine aufwändige Strommessung an der Stromschiene bzw. der Hochvoltleitung werden bei der beschriebenen elektrischen Sicherung und beim beschriebenen Verfahren nicht benötigt.

Durch die Steuerschaltung kann das mindestens eine induktive Kopplungsmittel in Bezug auf seine Abmessungen kleiner ausgelegt werden, da lediglich der Halbleiterschalter angesteuert werden muss und eine hierfür erforderliche Induktivität daher kleiner dimensioniert werden kann. Hierdurch können Materialkosten und Bauraum eingespart werden.

Sofern ein großer Strom über die Stromschiene bzw. die Hochvoltleitung fließt, wird über das mindestens eine induktive Kopplungsmittel ein Induktionsstrom induziert, der über die Diode den Kondensator auflädt. Der Kondensator ist in Bezug auf eine Kapazität derart ausgelegt, dass dieser nach dem Aufladen durch den induzierten Strom eine Ansteuerspannung bzw. einen Ansteuerstrom an einem Ansteuereingang des Halbleiterschalters bereitstellen kann, sodass der Halbleiterschalter in Durchlass schaltet, der bereitgestellte Zündstrom durch den Halbleiterschalter zum Zünder fließt. Der Zünder wird durch den Zündstrom gezündet und das Trennelement unterbricht durch eine Bewegung des Trennelements den Trennabschnitt der Stromschiene.

Da der Eingang des Halbleiterschalters in der Regel hochohmig ausgelegt ist, ist eine Leistung beim Schalten vernachlässigbar. Das mindestens eine induktive Kopplungsmittel kann daher in Bezug auf seine Abmessungen kleiner ausgelegt werden, da lediglich der Halbleiterschalter angesteuert werden muss und eine hierfür erforderliche Induktivität kleiner dimensioniert werden kann. Hierdurch können Materialkosten und Bauraum eingespart werden.

Durch die Diode der Steuerschaltung wird sichergestellt, dass in dem von dem mindestens einen induktiven Kopplungsmittel und dem Kondensator gebildeten Schwingkreis keine Oszillationen auftreten und der Halbleiterschalter nach einem Schalten in Durchlass nicht wieder in einen Sperrzustand wechselt.

Der bereitgestellte Zündstrom wird beispielsweise mit Hilfe einer 12 V-Bordnetzbatterie eines Kraftfahrzeugs bereitgestellt. Hierzu weist die Steuerschaltung eine elektrische Anschlussverbindung auf. Es kann jedoch auch vorgesehen sein, dass der bereitgestellte Zündstrom auf andere Weise bereitgestellt wird.

Der Halbleiterschalter kann insbesondere als Transistor, z.B. als Metall-Oxid-FeldeffektTransistor (MOSFET), ausgebildet sein.

Bevorzugt werden die elektrische Sicherung und das Verfahren zum Schutz einer Hochvoltbatterie (400 V etc.) in einem Kraftfahrzeug, insbesondere einem Kraftfahrzeug mit Hybrid- oder Elektroantrieb, eingesetzt. Die elektrische Sicherung und das Verfahren können prinzipiell aber auch zum Schutz anderer Fahrzeugbatterien mit anderen Spannungslagen (z.B. 48 V oder 850 V) und anderer Einrichtungen verwendet werden.

Insbesondere ist vorgesehen, dass eine Induktivität des mindestens einen induktiven Kopplungsmittels derart gewählt ist, dass im Falle eines Überschreitens eines vorgegebenen Stromschwellenwertes auf der Stromschiene durch den schnellen Anstieg des Stroms auf diesen Stromschwellenwertes und die resultierende Stromänderung im induktiven Kopplungsmittel eine elektrische Spannung induziert und damit ein Ansteuereingang des Halbleiterschalters zum Durchleiten des bereitgestellten Zündstroms auf Durchlass geschaltet wird.

In einer weiterbildenden Ausführungsform ist vorgesehen, dass eine Induktivität des mindestens einen induktiven Kopplungsmittels in Abhängigkeit eines von einer Hochvoltspannungsquelle bereitgestellten und über die Stromschiene fließenden Mindeststroms und/oder einen Anstieg auf diesen Mindeststrom gewählt ist. Insbesondere ist dies ein in einem Fehlerfall fließender Mindeststrom bzw. der Anstieg auf diesen Mindeststrom, beispielsweise ein bei niedrigen Temperaturen von einer Hochvoltbatterie eines Kraftfahrzeugs im Kurzschlussfall fließender Strom bzw. der Anstieg auf diesen Strom. Da ein im Fehlerfall über die Stromschiene fließender Strom stark von einer Betriebstemperatur der Hochvoltbatterie abhängt, muss gewährleistet sein, dass auch bei tiefen Temperaturen, beispielsweise bei einer Temperatur von -25°C, ein über das mindestens eine induktive Kopplungsmittel induzierter Strom groß genug ist, um den Kondensator ausreichend aufzuladen und den Zündstrom zuverlässig zu schalten. Dies erfolgt, indem das mindestens eine induktive Kopplungsmittel in Abhängigkeit des Mindeststroms bzw. des Anstiegs auf diesen Mindeststrom gewählt ist. Dieser Mindeststrom entspricht dann dem über die Stromschiene fließenden Strom, bei dem die elektrische Sicherung auslöst bzw. auslösen soll. Beträgt beispielsweise bei einer Hochvoltbatterie ein normaler Betriebsstrom 300 A, so kann der Strom bei Raumtemperatur im Fehlerfall (z.B. hervorgerufen durch einen Kurzschluss) auf Werte von 6000 bis 7000 A ansteigen. Durch eine verringerte Batterieleistung bei z.B. -25°C sinkt dieser Wert jedoch auf 250 A bis 450 A ab. Entsprechend wird die Induktivität in Abhängigkeit der Ströme bzw. dem Anstieg auf diese Ströme bei -25°C gewählt, sodass die elektrische Sicherung sowohl bei tiefen Temperaturen als auch bei darüber liegenden Temperaturen zuverlässig arbeitet.

In einer Ausführungsform ist vorgesehen, dass die elektrische Sicherung einen zum Kondensator parallel geschalteten Widerstand umfasst. Dieser Widerstand ist derart ausgelegt, dass der Kondensator in einem Normalbetrieb, das heißt wenn kein erhöhter Strom über die Stromschiene fließt und auch keine großen Stromänderungen zu verzeichnen sind, fortlaufend entladen wird. Dies ist notwendig, um ein konstantes Aufladen des Kondensators durch einen am mindestens einen induktiven Kopplungsmittel im Normalbetrieb, beispielsweise durch hochfrequente Strompulse, induzierten Strom und eine hieraus resultierende Fehlauslösung des Zünders zu verhindern. Jedoch muss der Widerstand groß genug gewählt sein, um einen durch Entladen des Kondensators über den Widerstand hervorgerufenen schnellen Abfall einer im Fehlerfall am Kondensator aufgebauten Ansteuerspannung zu verhindern, sodass die Ansteuerspannung lang genug oberhalb einer Schwellenspannung des Halbleiterschalters am Ansteuereingang des Halbleiterschalters anliegt und der Zündstrom lang genug am Zünder anliegt, dass dieser gezündet wird. Bei dem eingangs erwähnten "Pyro Safety Switch" der Firma AutoLiv muss zum Zünden beispielsweise für mindestens 0,5 Millisekunden ein Zündstrom von >1,75 A am Zünder anliegen.

In einer weiteren Ausführungsform ist vorgesehen, dass das mindestens eine induktive Kopplungsmittel mindestens eine Luftspule umfasst. Aufgrund des bereits erwähnten großen Eingangswiderstands des Halbleiterschalters ist es möglich, eine an der Stromschiene angeordnete Luftspule zu verwenden, um den Kondensator ausreichend zu beladen und hierdurch den Halbleiterschalter in Durchlass zu schalten. Die Luftspule ist insbesondere kostengünstig und weist eine geringe Masse bzw. ein geringes Gewicht auf.

In einer Ausführungsform ist vorgesehen, dass das induktive Kopplungsmittel mindestens einen Ferrit-Ringkern umfasst. Der Ferrit-Ringkern ist um die Stromschiene herum angeordnet. Der Ferrit-Ringkern ist von Vorteil, denn ein induktives Kopplungsmittel mit Ferrit-Ringkern weist bei gleicher Induktivität geringere Abmessungen auf als beispielsweise die Luftspule. Daher kann ein Bauraum reduziert werden.

In einer weiteren Ausführungsform ist vorgesehen, dass die elektrische Sicherung als Pyroelement ausgebildet ist, in das das mindestens eine induktive Kopplungsmittel und die Steuerschaltung integriert sind. Integriert soll in diesem Zusammenhang insbesondere bedeuten, dass das auf diese Weise hergestellte Pyroelement als ein einzelnes, kompaktes, insbesondere einstückiges, Modul bzw. Gehäuse ausgebildet ist. Da die Steuerschaltung einfach aufgebaut ist, lässt sich diese besonders einfach zusammen mit dem induktiven Kopplungsmittel, dem elektro-pyrotechnischen Zünder und dem Trennelement in ein kompaktes Gehäuse integrieren. Ein Bauraum kann hierdurch reduziert werden. Auch ein Einbau, eine Wartung und ein Austausch der elektrischen Sicherung werden durch ein solches kompakt ausgebildetes Pyroelement vereinfacht.

In einer Ausführungsform ist vorgesehen, dass die elektrische Sicherung ein weiteres an der Stromschiene angeordnetes induktives Kopplungsmittel und einen weiteren Kondensator umfasst, wobei das weitere induktive Kopplungsmittel und der weitere Kondensator derart gewählt sind und derart miteinander und mit dem Halbleiterschalter verbunden sind, dass der weitere Kondensator über einen am weiteren induktiven Kopplungsmittel induzierten Strom geladen werden kann und der zum Auslösen des elektro-pyrotechnischen Zünders notwendige Zündstrom über den geladenen weiteren Kondensator bereitgestellt werden kann. Hierdurch kann eine externe Spannungsquelle zum Bereitstellen des Zündstromes entfallen und die elektrische Sicherung kann vollständig autonom betrieben werden. Insbesondere sind keine weiteren elektrischen Zuleitungen zur elektrischen Sicherung zum Bereitstellen des Zündstroms notwendig. Im Normalbetrieb wird der weitere Kondensator mittels des weiteren induktiven Kopplungsmittels über einen darin induzierten Strom aufgeladen und insbesondere auf einem beladenden Zustand gehalten. Es können weitere elektrische Bauelemente, wie beispielsweise eine weitere Diode vorgesehen sein, die ein Entladen des weiteren Kondensators aufgrund von über die Stromschiene fließenden pulsartigen Strömen verhindert.

In einer Ausführungsform des Verfahrens ist entsprechend vorgesehen, dass das Bereitstellen des Zündstroms mittels eines weiteren an der Stromschiene angeordneten induktiven Kopplungsmittels und eines weiteren Kondensators erfolgt, wobei das weitere induktive Kopplungsmittel und der weitere Kondensator derart gewählt sind und derart miteinander und mit dem Halbleiterschalter verbunden sind, dass der weitere Kondensator über einen am weiteren induktiven Kopplungsmittel induzierten Strom geladen wird und der zum Auslösen des elektro-pyrotechnischen Zünders notwendige Zündstrom über den geladenen weiteren Kondensator bereitgestellt wird.

Weitere Merkmale zur Ausgestaltung des Verfahrens ergeben sich aus der Beschreibung von Ausgestaltungen der elektrischen Sicherung. Die Vorteile der Ausgestaltungen des Verfahrens entsprechen hierbei den Vorteilen der Ausgestaltungen der elektrischen Sicherung.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der elektrischen Sicherung;
- Fig. 2: eine schematische Darstellung einer Ausführungsform des induktiven Kopplungsmittels, umfassend eine Luftspule;
- Fig. 3: eine schematische Darstellung eines Zeitverlaufs einer Ansteuerspannung und eines Zündstroms bei Verwendung eines induktiven Kopplungsmittels mit Luftspule zur Verdeutlichung der Erfindung;

- Fig. 4: eine schematische Darstellung einer Ausführungsform des induktiven Kopplungsmittels, umfassend einen Ferrit-Ringkern;
- Fig. 5: eine schematische Darstellung eines Zeitverlaufs einer Ansteuerspannung und eines Zündstroms bei Verwendung eines induktiven Kopplungsmittels mit Ferrit-Ringkern zur Verdeutlichung der Erfindung;
- Fig. 6: eine schematische Darstellung einer Ausführungsform eines elektrischen Traktionsnetzes in einem Kraftfahrzeug;
- Fig. 7: eine schematische Darstellung einer weiteren Ausführungsform der elektrischen Sicherung.

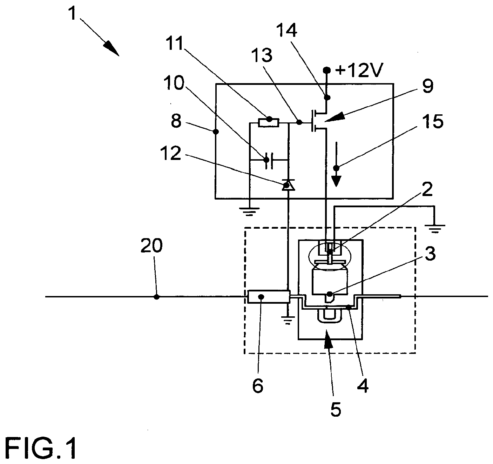

In Fig. 1 ist eine schematische Darstellung einer Ausführungsform der elektrischen Sicherung 1 gezeigt. Die elektrische Sicherung 1 umfasst einen elektro-pyrotechnischen Zünder 2, ein mittels des elektro-pyrotechnischen Zünders 2 bewegbares Trennelement 3, eine Stromschiene 4 mit einem Trennabschnitt 5, ein an der Stromschiene 4 angeordnetes induktives Kopplungsmittel 6 und eine Steuerschaltung 8.

Alternativ kann auch vorgesehen sein, dass das induktive Kopplungsmittel 6 an der Hochvoltleitung 20 angeordnet ist. Hierfür umfasst die elektrische Sicherung 1 beispielsweise eine Ausnehmung bzw. eine tunnelartige Durchführung (nicht gezeigt), durch die die Hochvoltleitung 20 unabhängig von einer Kontaktierung zur Stromschiene 4 abschnittsweise geführt werden kann. An dieser Ausnehmung bzw. tunnelartigen Durchführung ist dann das induktive Kopplungsmittel 6 angeordnet.

Die elektrische Sicherung 1 ist beispielsweise in eine Hochvoltleitung 20, beispielsweise über entsprechende Anschlusskontakte an der Stromschiene 4, zwischen eine Hochspannungsquelle (nicht gezeigt) und eine Hochspannungskomponente (nicht gezeigt) geschaltet.

Die Steuerschaltung 8 umfasst einen Halbleiterschalter 9 zum Schalten des bereitgestellten Zündstroms 15, einen Kondensator 10, einen zum Kondensator 10 parallel geschalteten Widerstand 11 und eine Diode 12. Die Diode 12 ist anodenseitig mit dem induktiven Kopplungsmittel 6 und kathodenseitig mit dem Kondensator 10 und einem Ansteuereingang 13 des Halbleiterschalters 9 verbunden.

Der Halbleiterschalter 9 ist beispielsweise als MOSFET ausgebildet. Der Ansteuereingang 13 ist dann ein Gatekontakt des MOSFETs und der Zündstrom 15 wird über Source- und Drainkontakte des MOSFETs geleitet.

Die Steuerschaltung 8 umfasst ferner einen Spannungsanschluss 14, über den ein Zündstrom 15, beispielsweise von einer 12 V-Bordnetzbatterie eine Kraftfahrzeugs von außen bereitgestellt werden kann.

Sofern der Strom über die Stromschiene 4 auf einen großen Wert (einige 1000 A) ansteigt, beispielsweise aufgrund eines Kurzschlusses an der hiermit verbundenen Hochvoltleitung 20, wird über das induktive Kopplungsmittel 6 ein Induktionsstrom induziert, der über die Diode 12 den Kondensator 10 auflädt. Der Kondensator 10 kann nach dem Aufladen eine Ansteuerspannung bzw. einen Ansteuerstrom an den Ansteuereingang 13 des Halbleiterschalters 9 bereitstellen, sodass der Halbleiterschalter 9 in Durchlass geschaltet wird und der bereitgestellte Zündstrom 15 an dem Zünder 2 anliegt. Der Zünder 2 wird durch den Zündstrom 15 gezündet und das Trennelement 3 unterbricht durch eine Bewegung des Trennelements 3 den Trennabschnitt 5 der Stromschiene 4.

Der Widerstand 11 ist derart ausgelegt, dass der Kondensator 10 in einem Normalbetrieb, das heißt wenn keine erhöhte Stromänderung zu verzeichnen ist und nur ein normaler Betriebsstrom über die Stromschiene 4 fließt, fortlaufend entladen wird. Dies ist notwendig, um ein konstantes Aufladen des Kondensators 10 durch einen am mindestens einen induktiven Kopplungsmittel 6 im Normalbetrieb induzierten Strom und eine hieraus resultierende Fehlauslösung des Zünders 2 zu verhindern. Jedoch muss der Widerstand 11 andererseits groß genug gewählt sein, um einen durch Entladen des Kondensators 10 über den Widerstand 11 hervorgerufenen schnellen Abfall einer im Fehlerfall am Kondensator 10 aufgebauten Ansteuerspannung zu verhindern, sodass die Ansteuerspannung lang genug oberhalb einer Schwellenspannung des Halbleiterschalters 9 am Ansteuereingang 13 des Halbleiterschalters 9 anliegt und der Zündstrom 15 für eine ausreichende Zeitdauer am Zünder 2 anliegt, dass dieser gezündet wird.

Durch die Diode 12 der Steuerschaltung 8 wird sichergestellt, dass in dem von dem mindestens einen induktiven Kopplungsmittel 6 und dem Kondensator 10 gebildeten Schwingkreis keine Oszillationen auftreten und der Halbleiterschalter 9 nach einem Schalten in Durchlass nicht wieder in einen Sperrzustand wechselt.

Es kann vorgesehen sein, dass die elektrische Sicherung als Pyroelement ausgebildet ist, in das das mindestens eine induktive Kopplungsmittel 6 und die Steuerschaltung 8 integriert sind. Hierdurch kann ein kompaktes, insbesondere einstückiges, Modul ausgebildet werden, das auf einfache Weise in eine Hochvoltleitung 20 angeordnet werden kann, ohne dass mehrere Einzelteile angeordnet und kontaktiert werden müssen.

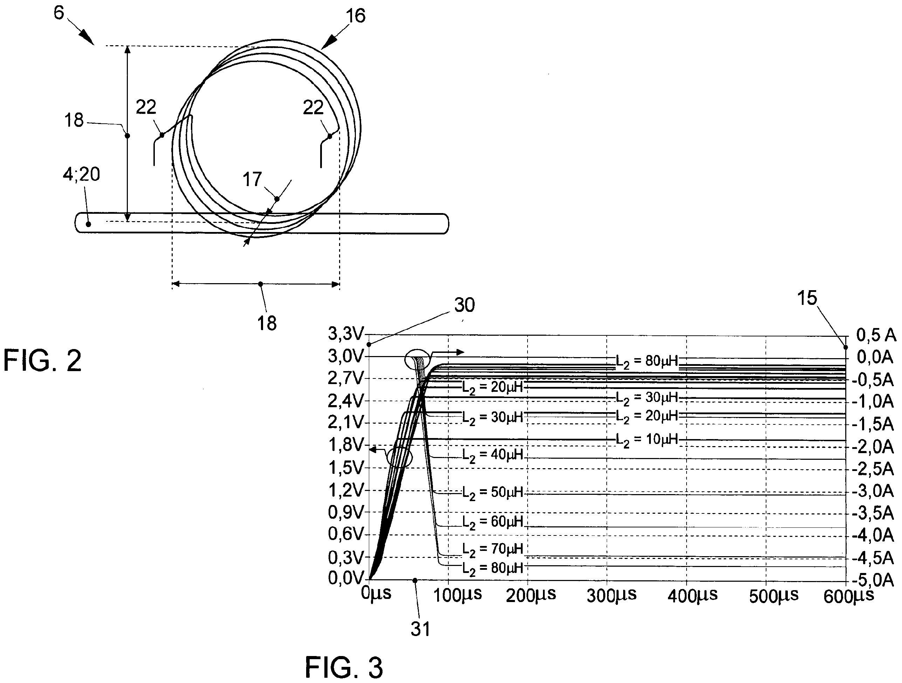

In Fig. 2 ist eine schematische Darstellung einer Ausführungsform des induktiven Kopplungsmittels 6 mit einer Luftspule 16 gezeigt. Die Luftspule 16 weist in einem beispielhaften Anwendungsfall eine (Sekundär-)Induktivität von 40 µH und eine Breite 17 von 15 Millimetern auf. Bei einem Durchmesser 18 von 30 Millimetern überdeckt die Luftspule 16 ein ausreichend langes Segment der Stromschiene 4 bzw. der Hochvoltleitung 20. Da die Stromschiene 4 bzw. die Hochvoltleitung 20 typischerweise einen Induktivitätsbelag von 10 nH/cm aufweisen, ergibt sich hierdurch in Bezug auf die Luftspule 16 eine (Primär-)Induktivität der Stromschiene 4 bzw. der Hochvoltleitung 20 von 30 nH. Dies ermöglicht eine ausreichende Ladung des Kondensators (vgl. Fig. 1) und das Durchschalten des Halbleiterschalters der Steuerschaltung mittels des durch Induktion geladenen Kondensators bei Stromänderungen, wie sie typischerweise nach einem Kurzschluss über die Stromschiene 4 bzw. die Hochvoltleitung 20 auftreten (das heißt Änderung des Stroms auf ca. 250-450 A bei - 25°C). Die Luftspule 16 ist über Kontakte 22 mit der Diode der Steuerschaltung und mit dem Erdpotential verbunden.

In Fig. 3 sind schematische Darstellungen eines Zeitverlaufs 31 einer Ansteuerspannung 30 und eines Zündstroms 15 bei Verwendung eines induktiven Kopplungsmittels mit Luftspule für unterschiedliche (Sekundär-)Induktivitäten der Luftspule zur Verdeutlichung der Erfindung gezeigt. Hierbei wird von einer Betriebstemperatur einer an die Stromschiene angeschlossenen Hochvoltbatterie von -25°C ausgegangen. In der beispielhaften Übersicht wird von einer (Primär-)Induktivität der Stromschiene 4 bzw. der Hochvoltleitung 20 (vgl. Fig. 2) von 30 nH und einem Kopplungsfaktor von k = 0,26 ausgegangen. In dieser Beispielbetrachtung hat der Kondensator 10 eine Kapazität von 0,2 µF und der Widerstand einen Wert von 1 MΩ. In Fig. 3 ist zu erkennen, dass mit zunehmender Ansteuerspannung 30 ein mit einer jeweiligen Ansteuerspannung 30 korrespondierender Zündstrom 15 ansteigt. Geht man von einem typischen elektro-pyrotechnischen Zünder aus (z.B. dem "Pyro Safety Switch" der Firma AutoLiv), so wird der Zünder bei einem Zündstrom 15 von >1,75 A ausgelöst, der für eine Dauer von >0,5 Millisekunden anliegen muss. Über die dargestellten Kurven lässt sich ablesen, dass hierzu eine Ansteuerspannung 30 von ca. 2,6 V ausreicht. Diese wird im Beispiel erreicht durch eine (Sekundär-)Induktivität der Luftspule von 40 µH. In diesem Fall steigt der Zündstrom 15 auf einen Wert oberhalb von den notwendigen 1,75 A an. Mit den gewählten Parametern ist also ein Auslösen der elektrischen Sicherung auf Grundlage eines Anstiegs des Stroms über die Stromschiene 4 bzw. die Hochvoltleitung 20 (vgl. Fig. 2) fließenden Stroms auf 250-450A im Fehlerfall auch bei tiefen Temperaturen (-25°C) der Hochvoltbatterie möglich.

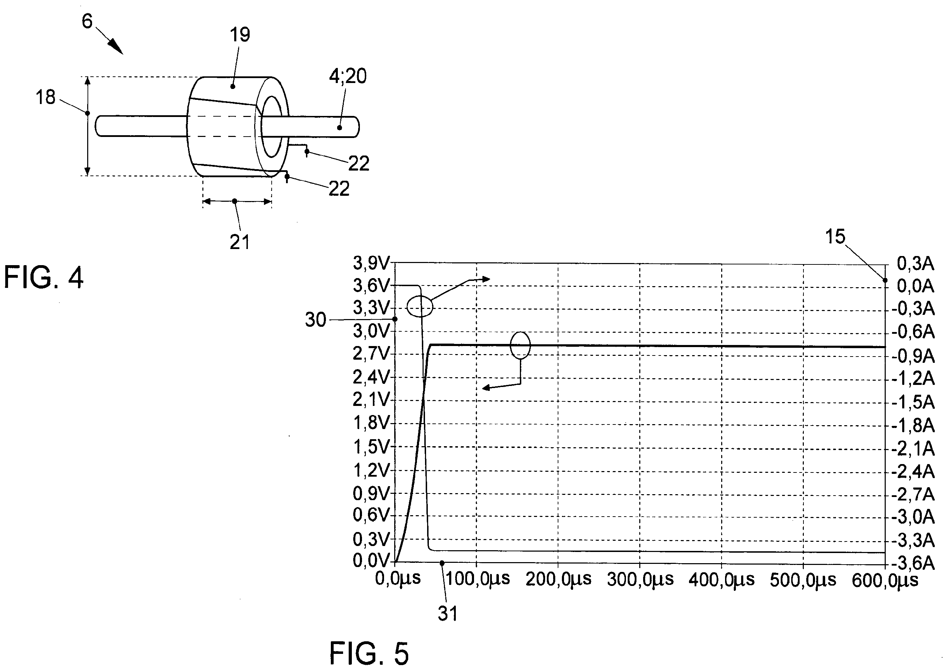

In Fig. 4 ist eine schematische Darstellung einer Ausführungsform des induktiven Kopplungsmittels 6 mit einem Ferrit-Ringkern 19 gezeigt. Der Ferrit-Ringkern 19 hat einen Durchmesser von 1,3 cm und eine Länge 21 von 1 cm. Der Ferrit-Ringkern 19 und eine darum umlaufend gewickelte Spule haben zusammen eine (Sekundär-)Induktivität von 6 µH. Da die Stromschiene 4 bzw. die Hochvoltleitung 20 typischerweise einen Induktivitätsbelag von 10 nH/cm aufweisen, ergibt sich hierdurch in Bezug auf den Ferrit-Ringkern 19 eine (Primär-)Induktivität der Stromschiene 4 bzw. der Hochvoltleitung 20 von 10 nH. Bei einem im Vergleich zur Luftspule größeren Kopplungsfaktor von 0,71 ermöglicht dies eine ausreichende Ladung des Kondensators und das Durchschalten des Halbleiterschalters der Steuerschaltung mittels des durch Induktion geladenen Kondensators bei einem Anstieg auf Ströme, wie sie typischerweise nach einem Kurzschluss über die Hochvoltleitung 20 fließen (ca. 250-450 A). Der Ferrit-Ringkern 19 ist über Kontakte 22 mit der Diode der Steuerschaltung und mit dem Erdpotential verbunden.

In Fig. 5 ist eine schematische Darstellung eines Zeitverlaufs 31 einer Ansteuerspannung 30 und eines Zündstroms 15 bei Verwendung eines induktiven Kopplungsmittels mit Ferrit-Ringkern 19 (vgl. Fig. 4) für eine beispielhafte (Sekundär-)Induktivität des Ferrit-Ringkerns von 6 µH zur Verdeutlichung der Erfindung gezeigt. Hierbei wird von einer Betriebstemperatur einer an die Stromschiene angeschlossenen Hochvoltbatterie von -25°C ausgegangen. In der beispielhaften Übersicht wird von einer (Primär-)Induktivität der Stromschiene 4 bzw. der Hochvoltleitung 20 (vgl. Fig. 4) von 10 nH und einem Kopplungsfaktor von k = 0,71 ausgegangen. In dieser Beispielbetrachtung hat der Kondensator 10 eine Kapazität von 0,2 µF und der Widerstand einen Wert von 1 MΩ. Als Halbleiterschalter kann beispielsweise ein Halbleiterschalter vom Typ IRFHS8242 25V Single N-Channel HEXFET PowerMosFet der Firma Infineon AG verwendet werden. In Fig. 5 ist zu erkennen, dass bei diesen Parametern durch den Anstieg des Stroms über die Stromschiene 4 auf einen Wert von 350 A innerhalb von weniger als 0,2 Millisekunden eine Ansteuerspannung 30 von ca. 2,8 V am Ansteuereingang des Halbleiterschalters bereitgestellt werden kann. Hierdurch steigt ein Zündstrom 15 betragsmäßig auf einen Wert von >3,3 A an. Geht man von einem typischen elektro-pyrotechnischen Zünder aus (z.B. dem "Pyro Safety Switch" der Firma AutoLiv), so wird der Zünder bei einem Zündstrom 15 von >1,75 A ausgelöst, der für eine Dauer von >0,5 Millisekunden anliegen muss. Mit den gewählten Parametern für den Ferrit-Ringkern ist ebenfalls ein Auslösen der elektrischen Sicherung auf Grundlage eines Anstiegs des Stroms über die Stromschiene 4 bzw. die Hochvoltleitung 20 (vgl. Fig. 4) auf 350 A innerhalb von weniger als 0,2 Millisekunden im Fehlerfall auch bei tiefen Temperaturen (-25°C) der Hochvoltbatterie möglich.

Die gezeigten Ausführungsformen sind lediglich als Beispiele zu verstehen. Insbesondere bei anderen Vorgaben hinsichtlich eines auf der Hochvoltleitung 20 ansteigenden (Fehler-)Stromes, bei dem der elektro-pyrotechnische Zünder auslösen soll, sind die Parameter, insbesondere die Abmessungen und die Induktivitäten sowie gegebenenfalls auch die Kapazität des Kondensators und der Widerstand anders zu wählen bzw. dem entsprechenden Anwendungsszenario anzupassen.

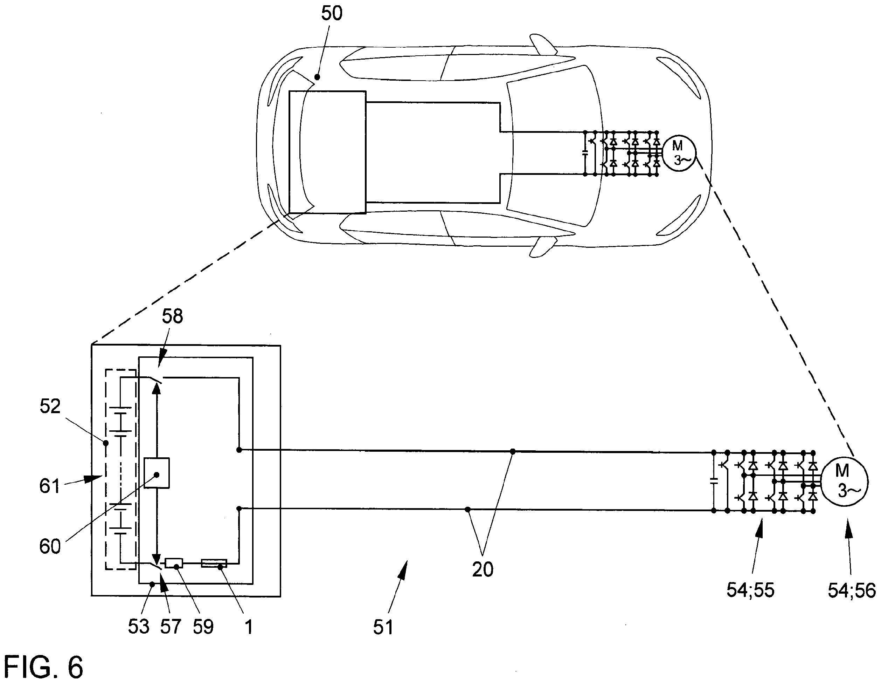

In Fig. 6 ist eine schematische Darstellung einer Ausführungsform eines elektrischen Traktionsnetzes 51 in einem Kraftfahrzeug 50 gezeigt. Das elektrische Traktionsnetz 51 umfasst eine Hochvoltspannungsquelle 52, eine Anschlusseinheit 53 und Hochvoltkomponenten 54. Die Hochvoltkomponenten 54 sind ein Stromrichter 55 und eine elektrische Maschine 56.

Die Anschlusseinheit 53 weist zwei elektromechanische Schütze 57, 58, einen Stromsensor 59 und eine Steuerung 60 auf.

Während des Batteriebetriebs (z.B. bei der Fahrt oder beim Laden der Batterien) wird eine Überlastung von Batteriezellen 61 der Hochvoltbatterie 52 und der Schütze 57, 58 verhindert, indem ein maximal zulässiger Strom begrenzt wird, wobei aktuelle Randbedingungen berücksichtigt werden, wie beispielsweise eine Temperatur der Batteriezellen 61. Hierzu erfasst die Steuerung 60 über den Stromsensor 59 einen Strom, der zwischen den Batteriezellen 62 und elektrischen Verbrauchern, das heißt insbesondere der elektrischen Maschine 56 und dem Stromrichter 55 des Kraftfahrzeugs 50, fließt. Wird der maximale Strom überschritten, so erfolgt nach einer vordefinierten Plausibilisierungszeit ein Öffnen der Schütze 57, 58 mittels der Steuerung 60. Hierdurch wird eine Beschädigung der Batteriezellen 61 verhindert.

Eine erfindungsgemäße Sicherung 1 schützt darüber hinaus vor einer Überlastung sowohl der Batteriezellen 61 als auch des elektrischen Traktionsnetzes 51. Hierbei sind der Stromrichter 55 und die elektrische Maschine 56 über eine Hochvoltleitung 20 mit der Hochvoltbatterie 52 verbunden, wobei die elektrische Sicherung 1 die Hochvoltleitung 20 absichert.

Der Stromkreis im elektrischen Traktionsnetz 51 lässt sich hierdurch im Fehlerfall, das heißt z.B. bei einem Kurzschluss auf der Hochvoltleitung 20 infolge eines Defekts oder Unfalls exakt bei einem definierten Schwellenwert des Stromes unterbrechen.

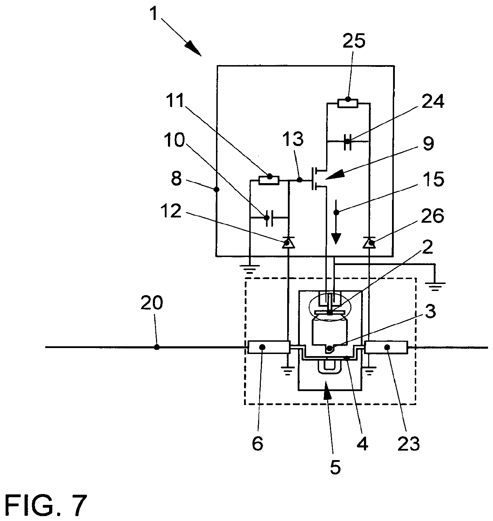

In Fig. 7 ist eine schematische Darstellung einer weiteren Ausführungsform der elektrischen Sicherung 1 gezeigt. Die elektrische Sicherung 1 ist prinzipiell wie die in der Fig. 1 gezeigte Ausführungsform aufgebaut. Gleiche Bezugszeichen bezeichnen daher gleiche Begriffe und Merkmale.

Zusätzlich ist jedoch vorgesehen, dass die elektrische Sicherung 1 ein weiteres an der Stromschiene 4 angeordnetes induktives Kopplungsmittel 23 aufweist. Die Steuerschaltung 8 weist zusätzlich ferner einen weiteren Kondensator 24, einen weiteren parallel zum weiteren Kondensator 24 geschalteten Widerstand 25 und eine weitere Diode 26 auf. Das weitere induktive Kopplungsmittel 23 und der weitere Kondensator 24 sind hierbei derart gewählt und derart miteinander und mit dem Halbleiterschalter 9 verbunden, dass der weitere Kondensator 24 über einen am weiteren induktiven Kopplungsmittel 23 induzierten Strom über die weitere Diode 26 geladen werden kann und der zum Auslösen des elektro-pyrotechnischen Zünders 2 notwendige Zündstrom 15 über den geladenen weiteren Kondensator 24 bereitgestellt werden kann. Insbesondere kann durch den weiteren Kondensator 24 eine externe Spannungsquelle entfallen. Bei einem beispielhaften Zündstrom 15 von >1,75 A, der für mindestens 0,5 Millisekunden am elektro-pyrotechnischen Zünder 2 anliegen muss, muss bei ansonsten zu der in der Fig. 1 gezeigten Ausführungsform gleichen Eigenschaften eine Induktivität des weiteren induktiven Kopplungsmittels 23 etwa 1500 µH betragen und eine Kapazität des weiteren Kondensators 24 etwa im Bereich von 25 µF liegen, um bei den in einem Fehlerfall über die Stromschiene 4 auf -250-450A ansteigenden Strömen den zum Auslösen des elektro-pyrotechnischen Zünders 15 notwendigen Zündstrom 15 bereitzustellen.

### Bezugszeichenliste

- 1: elektrische Sicherung
- 2: elektro-pyrotechnischen Zünder
- 3: bewegbares Trennelement
- 4: Stromschiene
- 5: Trennabschnitt
- 6: induktives Kopplungsmittel
- 8: Steuerschaltung
- 9: Halbleiterschalter
- 10: Kondensator
- 11: Widerstand
- 12: Diode
- 13: Ansteuereingang
- 14: Spannungsanschluss
- 15: Zündstrom
- 16: Luftspule
- 17: Breite
- 18: Durchmesser
- 19: Ferrit-Ringkern
- 20: Hochvoltleitung
- 21: Länge
- 22: Kontakt
- 23: weiteres induktives Kopplungsmittel
- 24: weiterer Kondensator
- 25: weiterer Widerstand
- 26: weitere Diode
- 30: Ansteuerspannung
- 31: Zeitverlauf
- 50: Kraftfahrzeug
- 51: elektrisches Traktionsnetz
- 52: Hochvoltspannungsquelle
- 53: Anschlusseinheit
- 54: Hochvoltkomponente
- 55: Stromrichter
- 56: elektrische Maschine
- 57: elektromechanisches Schütz
- 58: elektromechanisches Schütz
- 59: Stromsensor
- 60: Steuerung
- 61: Batteriezellen

## Patentansprüche

1. Elektrische Sicherung (1), umfassend:
einen elektro-pyrotechnischen Zünder (2),
ein mittels des elektro-pyrotechnischen Zünders (2) bewegbares Trennelement (3), und
eine Stromschiene (4) mit einem Trennabschnitt (5),
wobei das bewegbare Trennelement (3) in Bezug auf den elektro-pyrotechnischen Zünder (2) und den Trennabschnitt (5) der Stromschiene (4) derart angeordnet ist, dass das bewegbare Trennelement (3) sich nach einem Auslösen des elektro-pyrotechnischen Zünders (2) in Bewegung setzen und hierdurch die Stromschiene (4) im Trennabschnitt (5) durchtrennen kann,
mindestens ein an der Stromschiene (4) oder einer Hochvoltleitung (20) angeordnetes induktives Kopplungsmittel (6), und
eine Steuerschaltung (8) zum Steuern eines zum Auslösen des elektro-pyrotechnischen Zünders (2) bereitgestellten Zündstroms (15),
wobei die Steuerschaltung (8) mindestens einen Halbleiterschalter (9) zum Schalten des bereitgestellten Zündstroms (15) und eine Diode (12) umfasst, **dadurch gekennzeichnet, dass**
die Steuerschaltung (8) mindestens einen mit einem Ansteuereingang (13) des Halbleiterschalters (9) verbundenen Kondensator (10) umfasst und, dass
die Diode (12) auf einer Seite mit dem mindestens einen induktiven Kopplungsmittel (6) und auf der anderen Seite mit dem Kondensator (10) und einem Ansteuereingang (13) des Halbleiterschalters (9) verbunden ist.

2. Elektrische Sicherung (1) nach Anspruch 1, **gekennzeichnet durch** einen zum Kondensator (10) parallel geschalteten Widerstand (11).

3. Elektrische Sicherung (1) nach einem der vorangegangenen Ansprüche, **dadurch gekennzeichnet, dass** eine Induktivität des mindestens einen induktiven Kopplungsmittels (6) in Abhängigkeit eines von einer Hochvoltspannungsquelle (52) bereitgestellten und über die Stromschiene (4) fließenden Mindeststroms und/oder einen Anstieg auf diesen Mindeststrom gewählt ist.

4. Elektrische Sicherung (1) nach einem der vorangegangenen Ansprüche, **dadurch gekennzeichnet, dass** das mindestens eine induktive Kopplungsmittel (6) mindestens eine Luftspule (16) umfasst.

5. Elektrische Sicherung (1) nach einem der Ansprüche 1 bis 3, **dadurch gekennzeichnet, dass** das induktive Kopplungsmittel (6) mindestens einen Ferrit-Ringkern (19) umfasst.

6. Elektrische Sicherung (1) nach einem der vorangegangenen Ansprüche, **dadurch gekennzeichnet, dass** die elektrische Sicherung (1) als Pyroelement ausgebildet ist, in das das mindestens eine induktive Kopplungsmittel (6) und die Steuerschaltung (8) integriert sind.

7. Elektrische Sicherung (1) nach einem der vorangegangenen Ansprüche, **gekennzeichnet durch** ein weiteres an der Stromschiene (4) angeordnetes induktives Kopplungsmittel (23) und einen weiteren Kondensator (24), wobei das weitere induktive Kopplungsmittel (23) und der weitere Kondensator (24) derart gewählt sind und derart miteinander und mit dem Halbleiterschalter (9) verbunden sind, dass der weitere Kondensator (24) über einen am weiteren induktiven Kopplungsmittel (23) induzierten Strom geladen werden kann und der zum Auslösen des elektro-pyrotechnischen Zünders (2) notwendige Zündstrom (15) über den geladenen weiteren Kondensator (24) bereitgestellt werden kann.

8. Verfahren zum Betreiben einer elektrischen Sicherung (1), umfassend die folgenden Schritte:
Bereitstellen eines Zündstroms (15) für einen elektro-pyrotechnischen Zünder (2),
Auslösen des elektro-pyrotechnischen Zünders (2),
Bewegen eines bewegbaren Trennelements (3) mittels des ausgelösten elektro-pyrotechnischen Zünders (2),
Durchtrennen eines Trennabschnitts (5) einer Stromschiene (4) mittels des bewegbaren Trennelements (3), wobei
der zum Auslösen des elektro-pyrotechnischen Zünders (2) bereitgestellte Zündstrom (15) mittels eines Halbleiterschalters (9) einer Steuerschaltung (8) gesteuert wird,
**dadurch gekennzeichnet, dass**
der Halbleiterschalter (9) mittels eines Kondensators (10) der Steuerschaltung (8) an einem Ansteuereingang (13) des Halbleiterschalters (9) angesteuert wird, und dass
der Kondensator (10) mittels mindestens eines an der Stromschiene (4) oder einer Hochvoltleitung (20) angeordneten induktiven Kopplungsmittels (6) über eine Diode (12) geladen wird.

9. Verfahren nach Anspruch 8, **dadurch gekennzeichnet, dass** das Bereitstellen des Zündstroms (15) mittels eines weiteren an der Stromschiene (4) angeordneten induktiven Kopplungsmittels (23) und eines weiteren Kondensators (24) erfolgt, wobei das weitere induktive Kopplungsmittel (23) und der weitere Kondensator (24) derart gewählt sind und derart miteinander und mit dem Halbleiterschalter (9) verbunden sind, dass der weitere Kondensator (24) über einen am weiteren induktiven Kopplungsmittel (23) induzierten Strom geladen wird und der zum Auslösen des elektro-pyrotechnischen Zünders (2) notwendige Zündstrom (15) über den geladenen weiteren Kondensator (24) bereitgestellt wird.

10. Elektrisches Traktionsnetz (51) für ein Kraftfahrzeug (50), umfassend eine Hochvoltspannungsquelle (52) und mindestens eine Hochvoltkomponente (54), wobei die mindestens eine Hochvoltkomponente (54) über mindestens eine Leitung (20) mit der Hochvoltspannungsquelle (52) verbunden ist,
**dadurch gekennzeichnet, dass**
in der mindestens einen Leitung (20) eine elektrische Sicherung (1) nach einem der Ansprüche 1 bis 7 angeordnet ist.

## Claims

1. Electric fuse (1), comprising:
an electro-pyrotechnic igniter (2),
a disconnection element (3) able to be moved by way of the electro-pyrotechnic igniter (2), and a current line (4) having a disconnection section (5),
wherein the movable disconnection element (3) is arranged with respect to the electro-pyrotechnic igniter (2) and the disconnection section (5) of the current line (4) in such a way that the movable disconnection element (3) is able to be set in motion after the electro-pyrotechnic igniter (2) has been tripped and thereby is able to sever the current line (4) in the disconnection section (5), at least one inductive coupling means (6) arranged on the current line (4) or a high-voltage line (20), and
a control circuit (8) for controlling an ignition current (15) provided to trip the electro-pyrotechnic igniter (2),
wherein the control circuit (8) comprises at least one semiconductor switch (9) for switching the provided ignition current (15), and a diode (12), **characterized in that** the control circuit (8) comprises at least one capacitor (10) connected to an actuation input (13) of the semiconductor switch (9), and **in that** the diode (12) is connected on one side to the at least one inductive coupling means (6) and on the other side to the capacitor (10) and an actuation input (13) of the semiconductor switch (9).

2. Electric fuse (1) according to Claim 1, **characterized by** a resistor (11) connected in parallel with the capacitor (10).

3. Electric fuse (1) according to either of the preceding claims, **characterized in that** an inductance of the at least one inductive coupling means (6) is selected depending on a minimum current that is provided by a high-voltage source (52) and is flowing via the current line (4) and/or an increase to this minimum current.

4. Electric fuse (1) according to one of the preceding claims, **characterized in that** the at least one inductive coupling means (6) comprises at least one air-core coil (16) .

5. Electric fuse (1) according to one of Claims 1 to 3, **characterized in that** the inductive coupling means (6) comprises at least one ferrite toroidal core (19).

6. Electric fuse (1) according to one of the preceding claims, **characterized in that** the electric fuse (1) is designed as a pyro element into which the at least one inductive coupling means (6) and the control circuit (8) are integrated.

7. Electric fuse (1) according to one of the preceding claims, **characterized by** a further inductive coupling means (23) arranged on the current line (4), and a further capacitor (24), wherein the further inductive coupling means (23) and the further capacitor (24) are selected in such a way, and are connected to one another and to the semiconductor switch (9) in such a way, that the further capacitor (24) is able to be charged by a current induced at the further inductive coupling means (23) and the ignition current (15) required to trip the electro-pyrotechnic igniter (2) is able to be provided via the charged further capacitor (24).

8. Method for operating an electric fuse (1), comprising the following steps:
providing an ignition current (15) for an electro-pyrotechnic igniter (2),
tripping the electro-pyrotechnic igniter (2),
moving a movable disconnection element (3) by way of the tripped electro-pyrotechnic igniter (2),
severing a disconnection section (5) of a current line (4) by way of the movable disconnection element (3), wherein
the ignition current (15) provided to trip the electro-pyrotechnic igniter (2) is controlled by way of a semiconductor switch (9) of a control circuit (8), **characterized in that** the semiconductor switch (9) is actuated by way of a capacitor (10) of the control circuit (8) at an actuation input (13) of the semiconductor switch (9), and **in that** the capacitor (10) is charged by way of at least one inductive coupling means (6) arranged on the current line (4) or a high-voltage line (20), via a diode (12).

9. Method according to Claim 8, **characterized in that** the ignition current (15) is provided by way of a further inductive coupling means (23) arranged on the current line (4) and a further capacitor (24), wherein the further inductive coupling means (23) and the further capacitor (24) are selected in such a way, and are connected to one another and to the semiconductor switch (9) in such a way, that the further capacitor (24) is charged by a current induced at the further inductive coupling means (23) and the ignition current (15) required to trip the electro-pyrotechnic igniter (2) is provided via the charged further capacitor (24).

10. Electrical traction power system (51) for a motor vehicle (50), comprising a high-voltage source (52) and at least one high-voltage component (54), wherein the at least one high-voltage component (54) is connected to the high-voltage source (52) via at least one line (20),
**characterized in that**
an electric fuse (1) according to one of Claims 1 to 7 is arranged in the at least one line (20).

## Revendications

1. Dispositif de sécurité électrique (1) comprenant :
un dispositif d'allumage électro-pyrotechnique (2),
un élément de séparation (3) qui peut être déplacé au moyen du dispositif d'allumage électro-pyrotechnique (2), et
une barre conductrice (4) munie d'une portion de séparation (5),
l'élément de séparation déplaçable (3) étant disposé par rapport au dispositif d'allumage électro-pyrotechnique (2) et à la portion de séparation (5) de la barre conductrice (4) de telle sorte qu'après déclenchement du dispositif d'allumage électro-pyrotechnique (2) l'élément de séparation déplaçable (3) peut se mettre en mouvement et sectionner ainsi la barre conductrice (4) dans la portion de séparation (5),
au moins moyen de couplage inductif (6) disposé sur la barre conductrice (4) ou une ligne haute tension (20), et
un circuit de commande (8) pour commander un courant d'allumage (15) fourni pour le déclenchement du dispositif d'allumage électro-pyrotechnique (2),
le circuit de commande (8) comprenant au moins un commutateur à semi-conducteur (9) pour commuter le courant d'allumage (15) fourni, et une diode (12),
**caractérisé en ce que** le circuit de commande (8) comprend au moins un condensateur (10) relié à une entrée de pilotage (13) du commutateur à semi-conducteur (9), et **en ce que** la diode (12) est reliée d'un côté audit au moins un moyen de couplage inductif (6) et de l'autre côté au condensateur (10) et à une entrée de pilotage (13) du commutateur à semi-conducteur (9).

2. Dispositif de sécurité (1) électrique selon la revendication 1, **caractérisé par** une résistance (11) connectée en parallèle au condensateur (10).

3. Dispositif de sécurité électrique (1) selon l'une quelconque des revendications précédentes, **caractérisé en ce qu'**une inductance du au moins un moyen de couplage inductif (6) est sélectionnée en fonction d'un courant minimum circulant d'une source de haute tension (52) et par la barre conductrice (4) et/ou d'une montée jusqu'à ce courant minimum.

4. Dispositif de sécurité électrique (1) selon l'une quelconque des revendications précédentes, **caractérisé en ce que** ledit au moins un moyen de couplage inductif (6) comprend au moins une bobine à air (16).

5. Dispositif de sécurité électrique (1) selon l'une quelconque des revendications 1 à 3, **caractérisé en ce que** le moyen de couplage inductif (6) comprend au moins un noyau toroïdal en ferrite (19).

6. Dispositif de sécurité électrique (1) selon l'une quelconque des revendications précédentes, **caractérisé en ce que** le dispositif de sécurité électrique (1) est réalisé sous la forme d'un élément pyroélectrique dans lequel au moins un moyen de couplage inductif (6) et le circuit de commande (8) sont intégrés.

7. Dispositif de sécurité électrique (1) selon l'une quelconque des revendications précédentes, **caractérisé par** un autre moyen de couplage inductif (23) disposé au niveau de la barre conductrice (4) et un autre condensateur (24), l'autre moyen de couplage inductif (23) et l'autre condensateur (24) étant sélectionnés et reliés ensemble et au commutateur à semi-conducteur (9) de telle sorte que l'autre condensateur (24) peut être chargé par l'intermédiaire d'un courant induit au niveau de l'autre moyen de couplage inductif (23), et le courant d'allumage (15) nécessaire au déclenchement d'un dispositif d'allumage électro-pyrotechnique (2) peut être fourni par l'intermédiaire de l'autre condensateur (24) chargé.

8. Procédé de fonctionnement d'un dispositif de sécurité électrique (1), ledit procédé comprenant les étapes suivantes :
fournir un courant d'allumage (15) pour un dispositif d'allumage électro-pyrotechnique (2),
déclencher le dispositif d'allumage électro-pyrotechnique (2),
déplacer un élément de séparation déplaçable (3) au moyen du dispositif d'allumage électro-pyrotechnique (2) déclenché,
sectionner une portion de séparation (5) d'une barre conductrice (4) au moyen de l'élément de séparation déplaçable (3),
le courant d'allumage (15) nécessaire au déclenchement du dispositif d'allumage électro-pyrotechnique (2) étant commandé au moyen d'un commutateur à semi-conducteur (9) d'un circuit de commande (8),
**caractérisé en ce que** le commutateur à semi-conducteur (9) est piloté au moyen d'un condensateur (10) du circuit de commande (8) à une entrée de pilotage (13) du commutateur à semi-conducteur (9), et **en ce que** le condensateur (10) est chargé au moyen d'au moins un moyen de couplage inductif (6), disposé sur la barre conductrice (4) ou une ligne haute tension(20), par l'intermédiaire d'une diode (12).

9. Procédé selon la revendication 8, **caractérisé en ce que** la fourniture du courant d'allumage (15) est effectuée au moyen d'un autre moyen de couplage inductif (23), disposé sur la barre conductrice (4), et d'un autre condensateur (24), l'autre moyen de couplage inductif (23) et l'autre condensateur (24) étant sélectionnés et reliés ensemble et au commutateur à semi-conducteur (9) de telle sorte que l'autre condensateur (24) est chargé par un courant induit au niveau de l'autre moyen de couplage inductif (23), et le courant d'allumage (15) nécessaire au déclenchement du dispositif d'allumage électro-pyrotechnique (2) est fourni par l'intermédiaire de l'autre condensateur (24) chargé.

10. Réseau de traction électrique (51) destiné à un véhicule automobile (50), comprenant une source de haute tension (52) et au moins un composant à haute tension (54), ledit au moins un composant à haute tension (54) étant relié par au moins une ligne (20) à la source de haute tension (52),
**caractérisé en ce qu'**un dispositif de sécurité électrique (1) selon l'une quelconque des revendications 1 à 7 est disposé sur ladite au moins une ligne (20).
